# EUROPEAN PATENT APPLICATION

(11) **EP 4 723 551 A1**
(43) Date of publication of application: **08.04.2026**
(21) Application number: 24815900.6
(22) Date of filing: 31.05.2024
(51) Int. Cl.: H04L 9/40, H04L 43/18, B63B 49/00

(54) **SHIP NMEA PROTOCOL-BASED PENETRATION TEST METHOD AND APPARATUS, AND METHOD AND APPARATUS FOR CONTROLLING CONNECTION OF CBS INSIDE SHIP**

(30) Priority: 31.05.2023 KR 20230069921; 07.06.2023 KR 20230072847
(71) Applicant: Hanwha Ocean Co., Ltd., Geoje-si, Gyeongsangnam-do 53302 (KR); Cytur Inc., Seoul 08511 (KR)
(72) Inventor: BAE, Yang Sop, Seoul 06082 (KR); PARK, Dong Hoon, Sejong 30098 (KR); KWON, Hyun Mo, Seoul 01410 (KR); KWON, Eun Hyun, Seoul 07204 (KR); SEO, Haeng Myung, Geoje-si, Gyeongsangnam-do 53242 (KR); JO, Yong Hyun, Seoul 08511 (KR); YOO, Ji Woon, Seoul 08511 (KR)
(74) Representative: Cabinet Beau de Loménie
(86) International application number: PCT/KR2024/007450
(87) International publication number: WO 2024/248526

(57) **Abstract**

Disclosed herein are a shipboard NMEA protocol-based penetration test method and apparatus and a method and apparatus for controlling access by a CBS in a ship. The NMEA protocol-based penetration test method and apparatus according to the present invention can perform simple and rapid NMEA protocol penetration test on a ship in consideration of distinct characteristics of a ship.

## Description

### [Technical Field]

The present invention relates to a shipboard National Marine Electronics Association (NMEA) protocol-based penetration test method and apparatus which can perform NMEA protocol penetration testing on a ship in consideration of distinct characteristics of a ship, and a method and apparatus for controlling access by a CBS in a ship, which can authenticate a plurality of shipboard devices by utilizing a wireless communication function (such as Bluetooth, GPS, or Wi-Fi) of a CBS connected to a shipboard control system, such as navigation, communication, propulsion control systems.

### [Background Art]

With convergence of ICT into the shipbuilding and marine industry, cyber risks for ships have also increased. In response, international organizations have issued cybersecurity requirements, with IACS specifically mandating cybersecurity tests. Nevertheless, specific methods for performing these tests have not been provided yet.

A penetration test is a simulated cyberattack used to evaluate the security of a system. On land, penetration tests are targeted at ICT systems, such as web-based systems, information systems, and mobile devices, and operational technology (OT) systems, such as smart factories. In the automotive industry, CAN is a special automobile communication protocol and there is a specific CAN protocol penetration test method.

However, there is currently no penetration test method designed specifically for ships. To conduct a penetration test on ships, a network environment unique to ships needs to be taken into consideration. Accordingly, land-based penetration test methods have limitations since they do not reflect the specific characteristics of ships.

A shipboard CBS is defined as a computer-based system that is used/installed in a ship.

Generally, the CBS includes terminals used by the captain and crew on board a ship, such as mobile devices, tablets, laptops, and desktops, as well as navigation and communication systems provided to the ship, such as electronic chart display and information systems and integrated navigation systems.

The CBS authenticates a user as authorized if both the entered ID and password are verified in a pre-defined authenticator database

However, if the ID and password are compromised through hacking, malware, or other means, there is no way to prevent malicious access to shipboard control systems, such as a navigation control system, a communication control system, and a propulsion control system.

The related art is disclosed in Korean Patent Registration No. 10-0694248 (March 27, 2007) and Korean Patent Registration No. 10-2328275 (November 17, 2021).

### [Disclosure]

### [Technical Problem]

It is one aspect of the present invention to provide a shipboard NMEA protocol-based penetration test method and apparatus which can perform an NMEA protocol penetration test on a ship, thereby enabling simple and rapid penetration testing of ship networks based on the NMEA protocol.

It is one aspect of the present invention to provide a method and apparatus for controlling access by a CBS in a ship, which can prevent cyberattacks from remote locations by identifying critical systems (such as systems for operation and navigation management) that should only be accessed by authorized crew terminals and systems in the ship.

### [Technical Solution]

In accordance with one aspect of the present invention, a shipboard NMEA protocol-based penetration test method includes: a network connection step in which a penetration test apparatus is connected to a shipboard control network among ship networks; a confirmation step in which a confirmation unit of the penetration test apparatus confirms whether the network connected in the network connection step is used for NMEA communication by extracting a format and features of an NMEA sentence structure through packet capture and packet analysis; an attack method selection step in which an attack method selection unit of the penetration test apparatus selects an attack method when the network is confirmed to be used for NMEA communication in the confirmation step; an attack data generation step in which attack data is generated based on the attack method selected in the attack method selection step; an attack data storage step in which the attack data generated in the attack data generation step and network packets during an attack are stored; an attack data transmission step in which the attack data and the network packets stored in the attack data storage step are transmitted to the ship networks; and an attack data analysis step in which the attack data transmitted in the attack data transmission step is analyzed.

In addition, the attack method selected in the attack method selection step may include one selected from among fake NMEA data transmission, a replay attack, and a denial-of-service attack.

In addition, the attack method selected in the attack method selection step may be updated with new attack techniques.

In addition, the attack data analysis step may include analyzing the quantity and transmission time of the transmitted NMEA attack data and acquiring test results.

In accordance with another aspect of the present invention, a shipboard NMEA protocol-based penetration test apparatus is configured to perform a penetration test through connection to a shipboard control network and includes: a confirmation unit configured to confirm whether the network is used for NMEA communication by extracting a format and features of an NMEA sentence structure through packet capture and packet analysis; an attack method selection unit configured to select an attack method when the network is confirmed to be used for NMEA communication; an attack data generation unit configured to generate attack data based on the attack method selected by the attack method selection unit; an attack data storage unit configured to store the attack data generated by the attack data generation unit and network packets during an attack; an attack data transmission unit configured to send the attack data and the network packets stored in the attack data storage unit to a ship network; and an attack data analysis unit configured to analyze the attack data sent from the attack data transmission unit.

In addition, the attack method selected by the attack method selection unit may include one selected from among fake NMEA data transmission, a replay attack, and a denial-of-service attack.

In addition, the attack method selected by the attack method selection unit may be updated with new attack techniques.

In addition, the attack data analysis unit may analyze the quantity and transmission time of the transmitted NMEA attack data and may acquire test results.

In accordance with a further aspect of the present invention, an apparatus for controlling access by a CBS in a ship includes: a computer-based system (CBS) configured to log into a shipboard control system, such as navigation, communication, and propulsion control systems, via a communication unit after authentication of an ID and a password; a beacon transmitter configured to transmit location information of the CBS upon logging in or startup of the CBS; a beacon management server unit configured to receive the location information from the beacon transmitter and confirm whether device information of the CBS matches information registered in a beacon management server; a location confirmation unit configured to receive GPS information from the CBS when the CBS is located in a blind spot having no beacon information available during confirmation by the beacon management server unit; a navigation information confirmation unit configured to compare the GPS information received by the location confirmation unit with an AIS database; and an authentication unit configured to perform control such that the CBS is connected to an internal system of the ship when the device information of the CBS is confirmed to match the registered information by the beacon management server unit, or when the GPS information of the CBS is confirmed to match the AIS database by the navigation information confirmation unit.

In addition, the authentication unit may perform control such that the CBS is connected to the internal system of the ship upon reception of a beacon message indicating that the CBS is placed in the ship, or upon determining that the location information of the CBS matches a navigation route.

In accordance with yet another aspect of the present invention, a method for controlling access by a CBS in a ship includes: a login step in which a computer-based system (CBS) logs into a shipboard control system, such as navigation, communication, and propulsion control systems, via a communication unit after authentication of an ID and a password; a location information transmission step in which a beacon transmitter transmits location information of the CBS upon logging in or startup of the CBS in the login step; a comparative determination step in which, upon receiving the location information from the beacon transmitter, a determination is made as to whether device information of the CBS matches information registered in a beacon management server; a navigation information confirmation step in which, when the CBS is located in a blind spot having no beacon information available in the comparative determination step, the CBS transmits GPS information thereof to a location confirmation unit, and a navigation information confirmation unit compares the GPS information received by the location confirmation unit with an AIS database; and an authentication step in which an authentication unit performs control such that the CBS is connected to an internal system of the ship when the device information of the CBS is confirmed to match the registered information in the comparative determination step, or when the GPS information of the CBS is confirmed to match the AIS database in the navigation information confirmation step.

In addition, in the authentication step, the authentication unit may perform control such that the CBS is connected to the internal system of the ship upon reception of a beacon message indicating that the CBS is placed in the ship, or upon determining that the location information of the CBS matches a navigation route.

### [Advantageous Effects]

Embodiments of the present invention provide a shipboard NMEA protocol-based penetration test method and apparatus which can perform an NMEA protocol penetration test on a ship, thereby enabling simple and rapid penetration testing of ship networks based on the NMEA protocol.

Embodiments of the present invention provide a method and apparatus for controlling access by a CBS in a ship, which can prevent cyberattacks from remote locations by identifying critical systems (such as systems for operation and navigation management) that should only be accessed by authorized crew terminals and systems in the ship.

### [Description of Drawings]

FIG. 1 is a block diagram illustrating classification of networks in which a shipboard NMEA protocol-based penetration test apparatus according to the present invention is used.

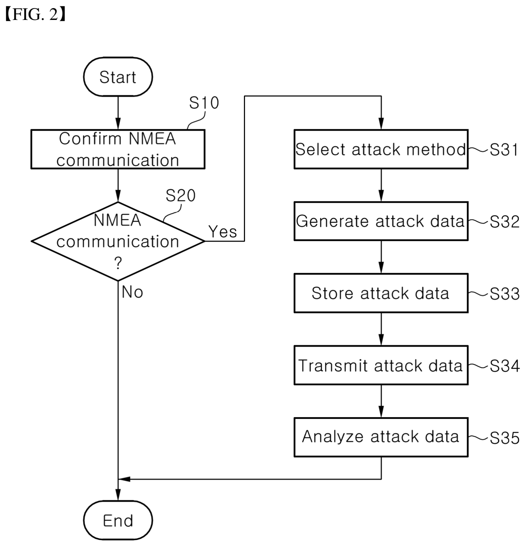

FIG. 2 is a flowchart of a shipboard NMEA protocol-based penetration test method according to the present invention.
FIG. 3 is a block diagram of an apparatus for controlling access by a CBS in a ship, according to one embodiment of the present invention.
FIG. 4 is a flowchart of a method for controlling access by a CBS within a ship, according to one embodiment of the present invention.

### [Best Mode]

The above and other aspects, features, and advantages of the present invention will become apparent from the detailed description of the following embodiments in conjunction with the accompanying drawings.

The terminology used herein is for the purpose of describing particular embodiments and is not intended to be limiting. As used herein, the terms "comprises," "comprising," "includes," and/or "including," when used in this specification, specify the presence of stated features, integers, steps, operations, elements, components, and/or groups thereof, but do not preclude the presence or addition of one or more other features, integers, steps, operations, elements, components, and/or groups thereof. Further, as used herein, the singular forms "a", "an" and "the" are intended to include the plural forms as well, unless the context clearly indicates otherwise.

Hereinafter, exemplary embodiments of the present invention will be described in detail with reference to the accompanying drawings. It should be understood that the embodiments are provided for complete disclosure and thorough understanding of the present invention by those skilled in the art and that the present invention is not limited to the following embodiments and may be embodied in different ways by those skilled in the art.

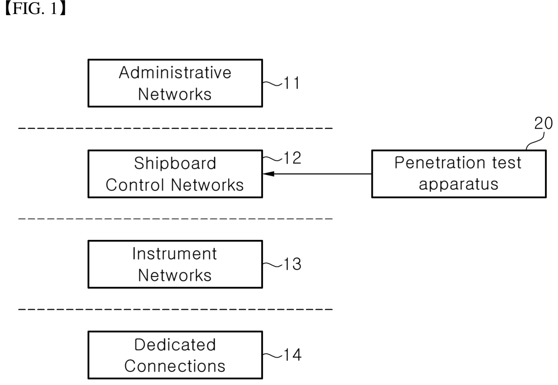

Referring to FIG. 1, a shipboard NMEA (National Marine Electronics Association) protocol-based penetration test apparatus 20 according to the present invention may be connected to ship networks 10, wherein the shipboard networks 10 may include administrative networks 11, shipboard control networks 12, instrument networks 13, and dedicated connections 14.

Here, the penetration test apparatus 20 may be connected to a shipboard control network 12 to confirm whether a network on a ship is used for NMEA communication.

The NMEA protocol, often simply called NMEA, is a set of standards for transmitting information such as time, position, and bearing.

The NMEA protocol was developed by U.S. National Marine Electronics Association, and is commonly used to relay data from devices such as gyrocompasses, GPSs, compasses, and inertial navigation systems (INSs).

The shipboard NMEA protocol-based penetration test apparatus 20 is configured to be connected to the shipboard control network to perform a penetration test, and may include: a confirmation unit 21 configured to confirm whether the connected network is used for NMEA communication by extracting the format and features of an NMEA sentence structure through packet capture and packet analysis; an attack method selection unit 22 configured to select an attack method upon confirming, by the confirmation unit 21, that the connected network is used for NMEA communication; an attack data generation unit 23 configured to generate attack data based on the attack method selected by the attack method selection unit 22; an attack data storage unit 24 configured to store the attack data generated by the attack data generation unit 23 and network packets during an attack; and an attack data transmission unit 25 configured to send the attack data and the network packets stored in the attack data storage unit 24 to a ship network; and an attack data analysis unit 26 configured to analyze the attack data sent from the attack data transmission unit 25.

In addition, in the penetration test apparatus 20, the attack method selected by the attack method selection unit 22 may include one selected from among fake NMEA data transmission, a replay attack, and a denial-of-service attack.

In addition, in the penetration teste apparatus 20, the attack method selected by the attack method selection unit 22 may be updated with new attack techniques.

In this way, various penetration tests can be conducted through the attack method selection unit 22 by selecting an attack method desired by a user or by updating the attack method data with new attack techniques.

In addition, the attack data analysis unit 26 of the penetration test apparatus 20 may analyze the quantity and transmission time of the transmitted NMEA attack data and may acquire results of the penetration test.

In this way, the penetration test apparatus 20 according to the present invention enables simple and rapid penetration testing of ship networks based on the NMEA protocol.

In accordance with another aspect of the present invention, a shipboard NMEA protocol-based penetration test method includes: a network connection step S10 in which a penetration test apparatus 20 is connected to a shipboard control network 12 via NMEA communication; and a confirmation step S20 in which a confirmation unit 21 of the penetration test apparatus confirms whether the ship network connected in the network connection step S10 is used for NMEA communication by extracting the format and features of an NMEA sentence structure through packet capture and packet analysis.

When the connected ship network is confirmed not to be used for NMEA communication in the confirmation step S20, a penetration test is terminated.

When the connected ship network is confirmed to be used for NMEA communication in the confirmation step S20, the process proceeds to an attack method selection step S31 in which an attack method is selected by an attack method selection unit 22 of the penetration test apparatus 20. Then, the process proceeds to an attack data generation step S32 in which an attack data generation unit 23 of the penetration test apparatus generates attack data based on the attack method selected in the attack method selection step S31. Then, the process proceeds to an attack data storage step S33 in which an attack data storage unit 24 stores the attack data generated in the attack data generation step S32. Then, the process proceeds to an attack data transmission step S34 in which an attack data transmission unit 25 sends the attack data stored in the attack data storage step S33 to ship networks. Finally, the process proceeds to an attack data analysis step S35 in which an attack data analysis unit 26 analyzes the attack data transmitted in the attack data transmission step S34.

In the shipboard NMEA protocol-based penetration test method, the attack method selected in the attack method selection step S31 may include one selected from among fake NMEA data transmission, a replay attack, and a denial-of-service attack.

In the shipboard NMEA protocol-based penetration test method, the attack method selected in the attack method selection step S31 may be updated with new attack techniques.

In the shipboard NMEA protocol-based penetration test method, the attack data analysis step S35 may include analyzing the quantity and transmission time of the transmitted NMEA attack data and acquiring results of the penetration test.

In this way, the shipboard NMEA protocol-based penetration test method enables simple and rapid penetration testing of ship networks based on the NMEA protocol.

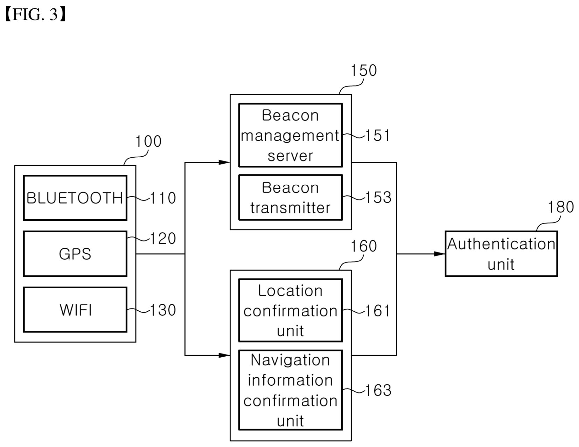

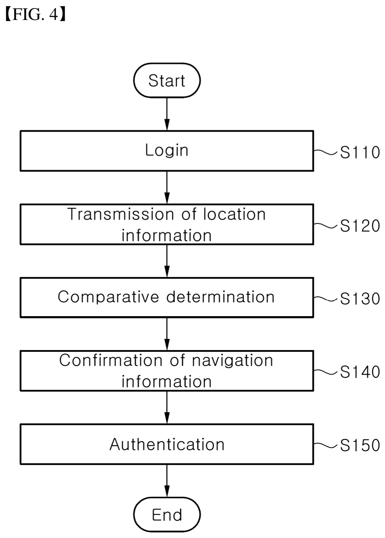

FIG. 3 is a block diagram of an apparatus for controlling access by a CBS in a ship, according to one embodiment of the present invention, and FIG. 4 is a flowchart of a method for controlling access by a CBS in a ship, according to one embodiment of the present invention.

Referring to FIG. 3 and FIG. 4, the apparatus for controlling access by a CBS in a ship relates to an authentication apparatus and method for controlling access by a CBS in a ship using device information of the CBS, in addition to an ID and a password.

As shown in FIG. 3, the apparatus for controlling access by a CBS in a ship may include a communication unit 100, a beacon transmitter 140, a beacon management server unit 150, a location confirmation unit 160, a navigation information confirmation unit 170, an authentication unit 180, and an automatic identification system (AIS) database 200.

Here, the beacon management server unit 150 may refer to a database registered in a beacon management server.

In addition, the CBS (computer-based system) may refer to a computer-based system that logs into shipboard control systems, such as navigation, communication, and propulsion control systems, via the communication unit 100 after authentication of an ID and a password.

The communication unit 100 may include a Bluetooth module 110, a GPS module 120, and a Wi-Fi module 130.

The beacon transmitter 140 may transmit location information of the CBS upon logging in or startup of the CBS, and the beacon management server unit 150 may receive the location information from the beacon transmitter 140 and may confirm whether device information of the CBS matches registered device information.

In addition, when the CBS is located in a blind spot having no beacon information available during confirmation by the beacon management server unit 150, the CBS sends GPS information thereof to the location confirmation unit 160, and the navigation information confirmation unit 170 compares the GPS information received by the location confirmation unit 160 with the AIS database 200.

When the device information of the CBS is confirmed to match the registered device information by the beacon management server unit 150 or when the GPS information of the CBS is confirmed to match the AIS database 200, the authentication unit 180 performs control such that the CBS is connected to an internal system of the ship. With the authentication unit 180, the apparatus according to the present invention control access by the CBS in the ship.

That is, when the location of the CBS cannot be confirmed through information comparison by the beacon management server unit 150, the navigation information confirmation unit 170 may confirm the location of the CBS through comparison between the GPS information and the AIS database.

In addition, the authentication unit 180 may also perform control such that the CBS is connected to an internal system of the vessel upon reception of a beacon message indicating that the CBS is placed in the ship, or upon determining that the location information of the CBS matches a navigation route.

In this way, the apparatus according to the present invention can prevent cyberattacks from remote locations by identifying critical systems (such as systems for operation and navigation management) that should only be accessed by authorized crew terminals and systems in the ship.

In accordance with yet another aspect of the present invention, a method for controlling access by a CBS in a ship may include a login step S110, a location information transmission step S120, a comparative determination step S130, a navigation information confirmation step S140, and an authentication step S150.

More specifically, the method for controlling access by a CBS in a ship according to the present invention may include: a login step S110 in which a CBS (computer-based system) logs into a shipboard control system, such as navigation, communication, and propulsion control systems, via a communication unit after authentication of an ID and a password; a location information transmission step S120 in which, upon logging in or startup of the CBS in the login step S110, a beacon transmitter transmits location information of the CBS; a comparative determination step S130 in which, upon receiving the location information transmitted from the beacon transmitter in the location information transmission step S120, a determination is made whether device information of the CBS matches information registered in a beacon management server; a navigation information confirmation step S140 in which, when the CBS is located in a blind spot having no beacon information available in the comparison determination step S130, the CBS transmits GPS information thereof to a location confirmation unit, and a navigation information confirmation unit compares the GPS information received by the location confirmation unit with an AIS database; and an authentication step S150 in which an authentication unit performs control such that the CBS is connected to an internal system of the ship when the device information of the CBS matches the information registered in the beacon management server in the comparative determination step S130, or when the GPS information of the CBS matches the AIS database in the navigation information confirmation step S140.

In addition, in the authentication step S150, the authentication unit performs control such that the CBS is connected to an internal system of the ship upon reception of a beacon message indicating that the CBS is placed in the ship, or upon determining that the location information of the CBS matches a navigation route.

In this way, the method according to the present invention can prevent cyberattacks from remote locations by identifying critical systems (such as systems for operation and navigation management) that should only be accessed by authorized crew terminals and systems in a ship.

Embodiments of the present invention described above may be implemented in the form of program instructions executable by various computer components and recorded on a computer-readable recording medium. The computer-readable recording medium may include program instructions, a data file, a data structure, and the like, solely or in combination. The program instructions recorded on the computer-readable recording medium may be specially designed and constructed for the present invention or may be those known and available to those skilled in the art of computer software. Examples of the computer-readable medium include a hardware device specifically configured to store and execute the program instructions, including: magnetic media, such as hard disks, floppy disks, and magnetic tape; optical recording media, such as CD-ROMs and DVDs; magneto-optical media, such as floptical disks; ROMs; RAMs; and flash memories. Examples of the program commands include not only machine language code generated by a compiler, but also high-level language code executable on a computer using an interpreter or the like. The hardware device may be configured to operate as one or more software modules to perform the operations according to the present invention, or vice versa.

Although some embodiments have been described herein, it should be understood that these embodiments are provided for illustration only and are not to be construed in any way as limiting the present invention, and that various modifications and changes can be made by those skilled in the art without departing from the spirit and scope of the invention. Therefore, the accompanying claims and their equivalents are intended to cover such changes or modifications as would fall within the scope and spirit of the present invention.

### [List of Reference numerals: Free text]

10: Network
11: Administrative networks
12: Shipboard control networks
13: Instrument networks
14: Dedicated connections
20: Penetration test apparatus
21: Confirmation unit
22: Attack method selection unit
23: Attack data generation unit
24: Attack data storage unit
25: Attack data transmission unit
26: Attack data analysis unit
100: Communication unit
110: Bluetooth module
120: Global Positioning System (GPS) module
130: Wi-Fi module
140: Beacon transmitter
150: Beacon management server unit
160: Location confirmation unit
170: Navigation information confirmation unit
180: Authentication unit
200: Automatic Identification System (AIS)

## Claims

1. A shipboard NMEA protocol-based penetration test method comprising:
a network connection step in which a penetration test apparatus is connected to a shipboard control network among ship networks;
a confirmation step in which a confirmation unit of the penetration test apparatus confirms whether the network connected in the network connection step is used for NMEA communication by extracting a format and features of an NMEA sentence structure through packet capture and packet analysis;
an attack method selection step in which an attack method selection unit of the penetration test apparatus selects an attack method when the network is confirmed to be used for NMEA communication in the confirmation step;
an attack data generation step in which attack data is generated based on the attack method selected in the attack method selection step;
an attack data storage step in which the attack data generated in the attack data generation step and network packets during an attack are stored;
an attack data transmission step in which the attack data and the network packets stored in the attack data storage step are transmitted to the ship networks; and
an attack data analysis step in which the attack data transmitted in the attack data transmission step is analyzed.

2. The shipboard NMEA protocol-based penetration test method according to claim 1, wherein, the attack method selected in the attack method selection step comprises one selected from among fake NMEA data transmission, a replay attack, and a denial-of-service attack.

3. The shipboard NMEA protocol-based penetration test method according to claim 2, wherein, the attack method selected in the attack method selection step is updated with new attack techniques.

4. The shipboard NMEA protocol-based penetration test method according to claim 1, wherein the attack data analysis step comprises analyzing the quantity and transmission time of the transmitted NMEA attack data and acquiring test results.

5. A shipboard NMEA protocol-based penetration test apparatus configured to perform a penetration test through connection to a shipboard control network, the apparatus comprising:
a confirmation unit configured to confirm whether the network is used for NMEA communication by extracting a format and features of an NMEA sentence structure through packet capture and packet analysis;
an attack method selection unit configured to select an attack method when the network is confirmed to be used for NMEA communication;
an attack data generation unit configured to generate attack data based on the attack method selected by the attack method selection unit;
an attack data storage unit configured to store the attack data generated by the attack data generation unit and network packets during an attack;
an attack data transmission unit configured to send the attack data and the network packets stored in the attack data storage unit to a ship network; and
an attack data analysis unit configured to analyze the attack data sent from the attack data transmission unit.

6. The shipboard NMEA protocol-based penetration test apparatus according to claim 5, wherein the attack method selected by the attack method selection unit comprises one selected from among fake NMEA data transmission, a replay attack, and a denial-of-service attack.

7. The NMEA protocol-based penetration test apparatus according to claim 6, wherein the attack method selected by the attack method selection unit is updated with new attack techniques.

8. The shipboard NMEA protocol-based penetration test apparatus according to claim 5, wherein the attack data analysis unit analyzes the quantity and transmission time of the transmitted NMEA attack data and acquires test results.

9. An apparatus for controlling access by a CBS in a ship, comprising:
a computer-based system (CBS) configured to log into a shipboard control system, such as navigation, communication, and propulsion control systems, via a communication unit after authentication of an ID and a password;
a beacon transmitter configured to transmit location information of the CBS upon logging in or startup of the CBS;
a beacon management server unit configured to receive the location information from the beacon transmitter and confirm whether device information of the CBS matches information registered in a beacon management server;
a location confirmation unit configured to receive GPS information from the CBS when the CBS is located in a blind spot having no beacon information available during confirmation by the beacon management server unit;
a navigation information confirmation unit configured to compare the GPS information received by the location confirmation unit with an AIS database; and
an authentication unit configured to perform control such that the CBS is connected to an internal system of the ship when the device information of the CBS is confirmed to match the registered information by the beacon management server unit, or when the GPS information of the CBS is confirmed to match the AIS database by the navigation information confirmation unit.

10. The apparatus according to claim 9, wherein the authentication unit performs control such that the CBS is connected to the internal system of the ship upon reception of a beacon message indicating that the CBS is placed in the ship or upon determining that the location information of the CBS matches a navigation route.

11. A method for controlling access by a CBS in a ship, comprising:
a login step in which a computer-based system (CBS) logs into a shipboard control system, such as navigation, communication, and propulsion control systems, via a communication unit after authentication of an ID and a password;
a location information transmission step in which a beacon transmitter transmits location information of the CBS upon logging in or startup of the CBS in the login step;
a comparative determination step in which, upon receiving the location information from the beacon transmitter, a determination is made as to whether device information of the CBS matches information registered in a beacon management server;
a navigation information confirmation step in which, when the CBS is located in a blind spot having no beacon information available in the comparative determination step, the CBS transmits GPS information thereof to a location confirmation unit, and a navigation information confirmation unit compares the GPS information received by the location confirmation unit with an AIS database; and
an authentication step in which an authentication unit performs control such that the CBS is connected to an internal system of the ship when the device information of the CBS is confirmed to match the registered information in the comparative determination step, or when the GPS information of the CBS is confirmed to match the AIS database in the navigation information confirmation step.

12. The method according to claim 11, wherein, in the authentication step, the authentication unit performs control such that the CBS is connected to the internal system of the ship upon reception of a beacon message indicating that the CBS is placed in the ship, or upon determining that the location information of the CBS matches a navigation route.
